# EUROPÄISCHE PATENTANMELDUNG

(11) **EP 2 308 667 A2**
(43) Veröffentlichungstag der Anmeldung: **13.04.2011**
(21) Anmeldenummer: 10186928.7
(22) Anmeldetag: 08.10.2010
(51) Int. Cl.: B29C 49/64, B29C 49/42, F25B 1/00

(54) **Blasmaschine mit energieeffizienter Kühlung**

(30) Priorität: 12.10.2009 DE 102009049150
(71) Anmelder: Krones AG, 93073 Neutraubling (DE)
(72) Erfinder: Voth, Klaus, 93083, Obertraubling (DE); Lappe, Ulrich, 93059, Regensburg (DE); Senn, Konrad, 93059, Regensburg (DE); Aust, Robert, 93092, Barbing (DE)
(74) Vertreter: Hannke, Christian

(57) **Zusammenfassung**

Vorrichtung zum Umformen von Kunststoffvorformlingen zu Kunststoffbehältnissen mit wenigstens einer Umformungsstation, welche die umzuformenden Kunststoffvorformlinge mit einem gasförmigen Medium beaufschlagt, um diese zu Kunststoffbehältnissen zu expandieren, wobei die Vorrichtung eine Kühleinrichtung aufweist, welche zur Kühlung wenigstens eines Bereichs der Vorrichtung dient. Erfindungsgemäß weist die Kühleinrichtung eine wärmegespeiste Kältemaschine (12) auf.

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit längerem bekannt. Dabei werden beispielsweise Kunststoffvorformlinge erwärmt und anschließend durch Beaufschlagen mit Druckluft zu Kunststoffbehältnissen expandiert. Genauer werden die Kunststoffvorformlinge in Blasformen eingegeben und nach Schließen der Blasform mittels Druckluft zu Kunststoffbehältnissen expandiert.

Dabei ist es im Stand der Technik teilweise erforderlich, dass Bereiche dieser Blasformen beispielsweise im Halsbereich der Blasform gekühlt werden. Auch ist es teilweise erforderlich, dass Bereiche einer Heizeinrichtung wie eines Ofens zum Erwärmen der Vorformlinge gekühlt werden wie beispielsweise Abschirmungen, die den Heiztunnel nach außen hin abschotten oder auch Gebläse-Luftwärmetauscher, die mit der gekühlten Luft die Gewindebereiche der Behältnisse kühlen, da diese nicht erwärmt werden sollen. Im Stand der Technik werden zum Zwecke dieser Kühlung üblicherweise Kompressionskältemaschinen verwendet, welche Kaltluft bzw. kalte Flüssigkeit erzeugen, welche dann wiederum zum Kühlen der erwähnten Umformungsvorrichtungen verwendet werden.

Der vorliegenden Erfindung liegt die Aufgabe zugrunde, die Energiebillanz derartiger Anlagen bzw. Vorrichtungen zum Umformen von Kunststoffvorformlingen zu Kunststoffbehältnissen zu verbessern. Diese Aufgabe wird erfindungsgemäß durch den Gegenstand der unabhängigen Ansprüche erreicht. Vorteilhafte Ausführungsformen und Weiterbildungen sind Gegenstand der Unteransprüche.
Eine erfindungsgemäße Vorrichtung zum Umformen von Kunststoffvorformlingen zu Kunststoffbehältnissen weist wenigstens eine Umformungsstation auf, welche die umzuformenden Kunststoffvorformlinge mit einem gasförmigen Medium beaufschlagt um diese zu Kunststoffbehältnissen zu expandieren. Dabei weist die Vorrichtung eine Kühleinrichtung auf, welche zur Kühlung wenigstens eines Bereichs der Vorrichtung dient. Erfindungsgemäß ist die Kühleinrichtung eine wärmegespeiste Kältemaschine.

Bei der Vorrichtung zum Umformen von Kunststoffvorformlingen zu Kunststoffbehältnissen handelt es sich dabei bevorzugt um eine sogenannte Streckblasmaschine, welche auch eine Reckstange aufweist, die die Kunststoffvorformlinge während des Expansionsvorgangs in ihrer Längsrichtung dehnt. Vorzugsweise weist die Vorrichtung eine Vielzahl von Umformungsstationen auf, welche jeweils die Kunststoffvorformlinge aufnehmen damit diese expandiert werden können. Vorteilhaft weisen die einzelnen Umformungsstationen jeweils Blasformen auf, innerhalb denen die Kunststoffvorformlinge zu Kunststoffbehältnissen expandiert werden.

Unter einer wärmegespeisten Kältemaschine wird eine solche Kältemaschine verstanden, der wenigstens zeitweise ein erwärmtes Medium wie beispielsweise erwärmte Flüssigkeit insbesondere Wasser oder erwärmte Luft zugeführt wird und die unter Verwendung dieses erwärmten Mediums Kälte erzeugt bzw. einem anderen Medium Wärme entzieht.

Vorteilhaft ist die Kältemaschine aus einer Gruppe von Kältemaschinen ausgewählt, welche Adsorbtionskältemaschinen, Absorbtionskältemaschinen, Sorbtionskältemaschinen und dergleichen enthält. Besonders bevorzugt handelt es sich bei der Kältemaschine um eine Adsorbtionskältemaschine.

Der Vorteil der Verwendung einer derartigen wärmegespeisten Kältemaschine besteht darin, dass Wärme und insbesondere Abwärme, die bei dem Herstellungsverfahren entsteht sowie auch Wärme aus der Umgebung, wie beispielsweise auch Wärme, welche mit Solarkollektoren gewonnen werden kann, unmittelbar zur Kühlung von Vorrichtungsteilen verwendet werden kann. Im Stand der Technik wird eine derartige Abwärme nicht genutzt sondern üblicherweise je nach den Temperaturverhältnissen ins Freie geleitet.

Vorteilhaft weist die Vorrichtung wenigstens einen und vorteilhaft zwei Temperierkreisläufe auf, wobei die Adsorbtionskältemaschine in beide Kreisläufe eingebunden ist. Vorteilhaft handelt es sich bei einem dieser Kühlmittelkreisläufe um einen Kaltwasserkreislauf in dem die Adsorbtionskältemaschine die Temperatur der Flüssigkeit reduziert und auf diese Weise gekühlte Flüssigkeit der Vorrichtung beispielsweise zur Kühlung der Blasformen zugeführt werden kann.

Bei dem zweiten Kreislauf handelt es sich vorzugsweise um einen Warmflüssigkeitskreislauf d. h. in diesem Falle erwärmt die Adsorbtionskältemaschine ein Medium und insbesondere Wasser. Dieser Kreislauf kann insbesondere der Kältemaschine entstehende Abwärme zuführen.

Vorteilhaft sind auch Bereiche der Vorrichtung in wenigstens einem Kreislauf und besonders bevorzugt in beide Kreisläufe eingebunden. Auf diese Weise kann eine Abwärme, die in bestimmten Bereichen der Maschine entsteht genutzt werden, um andere Bereiche der Maschine zu kühlen.

Bei einer weiteren vorteilhaften Ausführungsform weist die Vorrichtung eine Zuführeinrichtung auf, welche der Kältemaschine von einem Bereich der Vorrichtung stammende Wärme zuführt.

Eine Adsorbtionskältemaschine weist üblicherweise einen Adsorber und einen Desorber und einen Verdampfer bzw. einen Kondensator auf, die in einem gemeinsamen Behälter untergebracht oder etwa auch mit einem Rohr miteinander verbunden sind. Ein Vorteil der Sorbtion liegt darin, dass der Ablauf allein durch die Temperierung des Sorbtionsmittels erfolgt. Auf diese Weise ist es möglich, dass der genannte Behälter hermetisch und gasdicht abgeschlossen ist. Wird beispielsweise als Kältemittel Wasser verwendet, so arbeitet die Adsorbtionskältemaschine in der Regel bzw. immer im Unterdruckbetrieb. Der apparative Aufbau ist relativ einfach, weil für einen Ad- bzw. Desorber und einen Verdampfer bzw. Kondensator nur jeweils ein Apparat erforderlich ist.

Ein Unterschied zu einer Kältemaschine allgemeiner Art besteht darin, dass das Sorbtionsmittel in fester Form nicht umgewälzt werden kann. Daher können sowohl Ad- als auch Desorber und auch Verdampfer und Kondensator jeweils dasselbe Material im selben Behälter sein.

Vorteilhaft weist die Vorrichtung einen ersten Wärmetauscher auf, der zwischen einem Wärme abgebenden Bereich der Vorrichtung und der Kältemaschine angeordnet ist. So kann beispielsweise Wärme von einem Durchgangsofen zur Erwärmung der Kunststoffvorformlinge diesem Wärmetauscher in Form von erhitzter Luft oder auch in Form von erhitztem Wasser zugeführt werden und der Wärmetauscher kann unter Verwendung dieser Wärme ein weiteres Kühlmittel wie Luft oder insbesondere Wasser für den oben erwähnten Heißwasserkreislauf erwärmen.

Bei einer weiteren vorteilhaften Ausführungsform weist die Vorrichtung einen zweiten Wärmetauscher auf, der besonders bevorzugt dem ersten Wärmetauscher nachgeschaltet ist. Dieser zweite Wärmetauscher kann beispielsweise verwendet werden um weitere Wärmeabnehmer der gesamten Anlage wie z. B. einen Heißleimbehälter, eine Etikettiermaschine, eine Vorformlingsvorerwärmung aber auch sonstige Einrichtungen wie sanitäre Anlagen zu versorgen.

Bei einer weiteren vorteilhaften Ausführungsform weist die Zuführeinrichtung, welche der Kältemaschine Wärme zuführt eine Leitung zum Transport eines flüssigen oder gasförmigen Mediums auf. So kann beispielsweise Abwärme in gasförmiger Form an den oben erwärmten Wärmetauscher zugeführt werden und dieser Wärmetauscher kann anschließend Wasser erwärmen, welches wiederum der Adsorbtionskältemaschine zugeführt wird.

Bei einer weiteren vorteilhaften Ausführungsform weist die Vorrichtung eine Erwärmungseinrichtung zum Erwärmen der Kunststoffvorformlinge auf wobei diese Erwärmungseinrichtung in einer Transportrichtung der Kunststoffvorformlinge stromaufwärts bezüglich der Umformstation angeordnet ist. Dabei handelt es sich insbesondere um einen Ofen, durch welchen die Kunststoffvorformlinge durchlaufen und währenddessen erwärmt werden. Vorteilhaft ist daher auch eine Vorrichtung vorgesehen, welche die Kunststoffvorformlinge transportiert. Vorteilhaft transportiert die Transporteinrichtung die Kunststoffvorformlinge vereinzelt.

Bei einer weiteren vorteilhaften Ausführungsform ist eine Verbindungsleitung von der genannten Erwärmungseinrichtung hin zu der Kältemaschine vorgesehen. So entsteht insbesondere in dem genannten Ofen ein hohes Maß an Abwärme, welche wiederum zum Zuführen an die Kältemaschine geeignet ist.

Bei einer weiteren vorteilhaften Ausführungsform weist die Vorrichtung eine Wandlereinrichtung auf, welche Licht in Wärmeenergie wandelt. So kann beispielsweise zusätzlich zu der Wärme aus der Vorrichtung oder anstelle derselben mit Hilfe von Solarkollektoren Wärmeenergie verwendet werden. Auch wäre es möglich, zusätzlich die Abwärme weiterer Anlagenteile zur Versorgung der Kältemaschine zu nutzen. So ist es z.B. denkbar, auf der dem Heiztunnel abgewandten Seite desselben (z.B. in oder hinter den heute üblichen Wärmeschutzkacheln) Rohre zu verlegen, durch die ein Temperiermedium fließt, mit dessen Hilfe die entstehende Ofen-Abwärme direkt in ein flüssiges Medium abgeleitet und so für die Kältemaschine nutzbar gemacht wird.

Die vorliegende Erfindung ist weiterhin auf ein Verfahren zum Umformen von Kunststoffvorformlingen zu Kunststoffbehältnissen gerichtet, wobei die Kunststoffvorformlinge in einer Heizeinrichtung wenigstens abschnittsweise erwärmt werden und anschließend in wenigstens einer Umformstation zu Kunststoffbehältnissen umgeformt werden. Dabei wird bei diesem Verfahren mittels wenigstens einer Kühleinrichtung wenigstens ein Kühlvorgang durchgeführt. Erfindungsgemäß wird zur Kühlung eine wärmegespeiste Kältemaschine verwendet.

Bei einem bevorzugten Verfahren wird eine Abwärme des Verfahrens der genannten Kältemaschine, bei der es sich insbesondere um eine Adsorbtionskältemaschine handelt, zugeführt. Vorteilhaft handelt es sich bei dem Verfahren zum Umformen von Kunststoffbehältnissen um einen Streckblasvorgang, d.h. es wird insbesondere eine Reckstange zum Dehnen der Kunststoffvorformlinge entlang deren Längsrichtung eingesetzt.

In aufwändigen Untersuchungen konnte ermittelt werden, dass gerade bei Streckblasmaschinen Abwärme in einer solchen Menge entsteht, dass diese besonders energieeffizient für Kühlvorgänge genutzt werden kann, insbesondere bei Verwendung einer Adsorptionskältemaschine.

Wie erwähnt wird beim Betrieb einer derartigen Umformmaschine beispielsweise im Bereich des Ofens sowie im Bereich der Blasformen Kälteleistung benötigt. Diese Kälteleistung wird im Gegensatz zum Stand der Technik nicht mehr auf Kompressorbasis erzeugt sondern insbesondere mit Hilfe der genannten Adsorbtionsmaschine. Derartige Adsorbtionsmaschinen können neuerdings bereits ab einer Abwärme im Bereich von 65°C arbeiten und diese in Kälteleistung umwandeln.

Vorteilhaft arbeitet eine derartige Adsorbtionskältemaschine unter Verwendung von Aktivkohle, Zeolith oder Silikagel und besonders bevorzugt unter Verwendung von Zeolith, so dass in umweltfreundlicher Weise Wärmeströme erzeugt werden können. Dabei beruht das Konzept einerseits auf der Adsorbtion von Wasser an einem porösen Feststoff wie beispielsweise Zeolith und die stark exotherm verläuft und andererseits auf der durch diese Adsorbtion aus dem Gleichgewicht gebrachte Wasser-/ Wasserdampf-Atmosphäre.

Es wird daher erfindungsgemäß vorgeschlagen Kältemaschinen und insbesondere Adsorbtionskältemaschinen für derartige Prozesse, welche die Erzeugung von Kälteleistung erfordern, zu verwenden. Insbesondere handelt es sich bei derartigen Vorrichtungen um Rundläufer oder Taktblasmaschinenanlagen.

Schließlich ist die vorliegende Erfindung auch auf die Verwendung einer Kältemaschine und insbesondere einer Adsorbtionskältemaschine zum Betrieb einer Vorrichtung zum Umformen von Kunststoffvorformlingen zu Kunststoffbehältnissen gerichtet.

Weitere Vorteile und Ausführungsformen ergeben sich aus den beigefügten Zeichnungen. Darin zeigen:
- Fig. 1: Eine schematische Darstellung einer erfindungsgemäßen Vorrichtung:
- Fig. 2: eine Seitenansicht einer Vorrichtung zum Umformen einschließlich Heizein- richtung;
- Fig. 3: eine schematische Darstellung zur Veranschaulichung der Funktionsweise einer Adsorbtionskältemaschine.

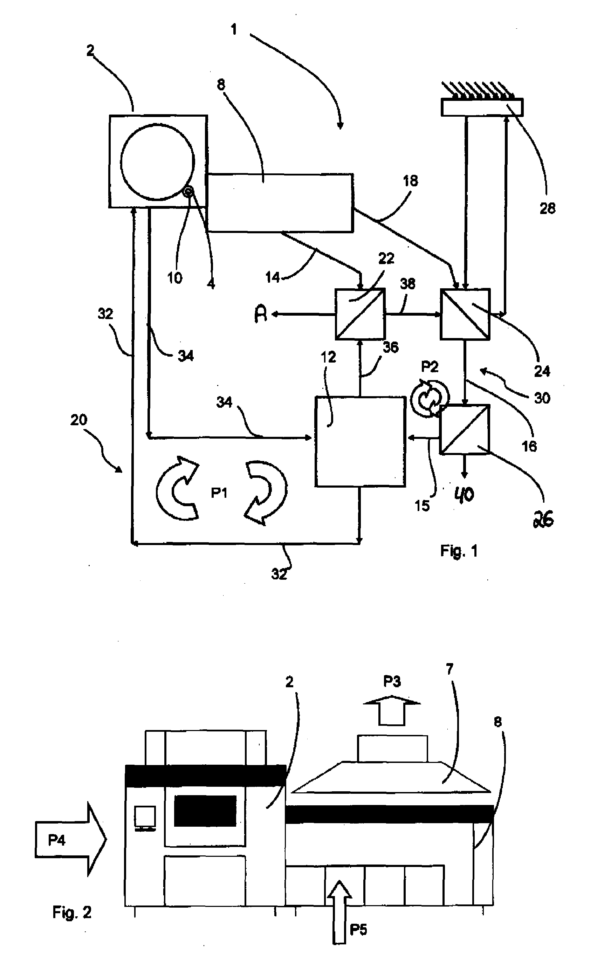

Fig. 1 zeigt eine schematische Darstellung einer erfindungsgemäßen Vorrichtung 1 zum Umformen von Kunststoffvorformlingen 10 zu Kunststoffbehältnissen. Unter dem Begriff Vorrichtung wird hier die Gesamtheit der Anlage verstanden also einschließlich der eigentlichen Einrichtung 2 zum Umformen von Kunststoffvorformlingen zu Kunststoffbehältnissen, einer Heizeinrichtung 8 bzw. eines Ofens sowie einer Kühleinrichtung 12 sowie den einzelnen Verbindungsleitungen, welche die genannten Anlagenteile miteinander verbinden.

Die Bezugszeichen 14 und 18 beziehen sich auf Leitungen, welche hier Abwärme ausgehend von der Heizeinrichtung 8 jeweils Wärmetauschern 22 und 24 zuführen. Es wird darauf hingewiesen, dass Leitungen hier vereinfacht durch Pfeile dargestellt sind. Daneben könnte auch in der eigentlichen Umformeinrichtung 2 Abwärme entstehen, welche gegebenenfalls den Wärmetauschern 22 und/oder 24 zugeführt werden kann.

Das Bezugszeichen 22 bezieht sich hier genauer auf einen ersten Wärmetauscher, der von Abwärme genauer gesagt von erhitzter Luft, die ihm über die Zuführleitung 14 zugeführt wird ein weiteres Medium, wie beispielsweise eine Flüssigkeit, erwärmt. Das Bezugszeichen 30 bezieht sich in seiner Gesamtheit auf einen Heißwasserkreislauf, in den sowohl die Kältemaschine 12, als auch der erste Wärmetauscher 22 und zwei weitere Wärmetauscher 24 und 26 eingebunden sind. Weitere Bestandteile dieses Heißwasserkreislaufs sind auch die Leitungen 36, 38 sowie 16 und 15. Dabei ist, wie oben erwähnt, die Leitung 14 hier eine Leitung für ein gasförmiges Medium und Leitung 38 eine Leitung für eine Flüssigkeit. Dies bedeutet, dass in dem Heißwasserkreislauf 30 insbesondere Wasser transportiert wird. Die Pfeile P1 und P2 deuten dabei jeweils die Umlaufrichtung des jeweiligen Mediums innerhalb der beiden Kreisläufe 20 und 30 an.

Dem zweiten Wärmetauscher 24 kann ebenfalls von dem Ofen 8 Abwärme über eine Zuleitung 18 zugeführt werden. Daneben kann jedoch auch ein Solarkollektor 28 eingesetzt werden, um dem zweiten Wärmetauscher 24 zusätzlich heiße Luft bzw. heißes Wasser zuzuführen. Die Abwärme kann aus dem Ofen 8 sowohl in flüssiger als auch in gasförmiger Form entnommen werden. Der dritte Wärmetauscher 26 kann beispielsweise dazu dienen, um den Flüssigkeiten Wärme zu entziehen und diese an einen weiteren Abnehmer 40 zuzuführen. Bei diesem weiteren Abnehmer kann es sich beispielsweise um eine Einrichtung zum Erwärmen der Kunststoffvorformlinge, einen Heißleimbehälter aber auch um sanitäre Anlagen wie Duschen für die Mitarbeiter eines Unternehmens handeln. Die erhitzte Flüssigkeit wird damit wie erwähnt über eine Leitung 15 der Kältemaschine zugeführt und über eine Leitung 36 wieder abgeführt.

Das Bezugszeichen 20 kennzeichnet in seiner Gesamtheit einen Kaltwasserkreislauf, in den ebenfalls die Kältemaschine 12 eingebunden ist. Daneben weist dieser Kaltwasserkreislauf Leitungen 32 und 34 auf. Über diesen zweiten Kreislauf kann eine Kühlflüssigkeit wie Wasser aber gegebenenfalls auch ein gasförmiges Medium wie Kühlluft in die Einrichtung 2 geführt werden. So ist es beispielsweise möglich, gekühlte Luft an die einzelnen Blasformen insbesondere an einen Halsbereich derselben zuzuführen.

Fig. 2 zeigt eine schematische Seitenansicht eines Teils einer erfindungsgemäßen Vorrichtung, genauer gesagt die Einrichtung 2 zum Umformen von Kunststoffvorformlingen zu Kunststoffbehältnissen sowie den dieser vorgeschalteten Ofen 8. Die Pfeile P4 und P5 geben jeweils an, an welchen Bereichen der Maschine Kältebedarf besteht. So kann Kältebedarf wie durch den Pfeil P4 veranschaulicht zur Formentemperierung bestehen aber auch ein Bedarf an Kühlmittel zur Mündungskühlung in dem Ofen 8 oder auch zur Kühlung der Schaltschränke. Dieses Kühlmittel weist dabei jeweils Temperaturen zwischen 5°C und 20°C, bevorzugt zwischen 6°C und 15 °C und besonders bevorzugt zwischen 6°C und 10 °C auf.

Andererseits entsteht insbesondere an dem Ofen 8 auch Abwärme, die entlang des Pfeils P3 abgeführt werden kann. Zu diesem Zweck kann an dem Ofen eine Sammeleinrichtung wie eine Haube 7 vorgesehen sein, welche diese Abwärme sammelt, und wie in Fig. 1 gezeigt, über die Leitungen 14 und 18 an die jeweiligen Wärmetauscher abführt.

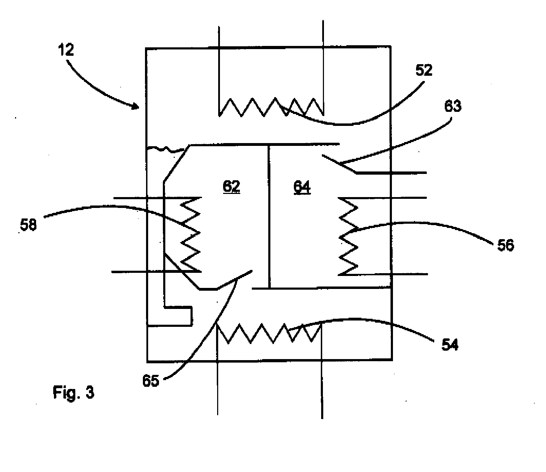

Fig. 3 veranschaulicht die Funktionsweise einer Adsorptionskältemaschine, welche bevorzugt als Kältemaschine eingesetzt wird. Dabei sind hier zwei Sorbtions- bzw. Adsorptionskammern 62, 64 vorhanden, die abwechselnd in einem Adsorbtions- und Desorptionszyklus arbeiten. Entsprechend können Verbindungen 63 und 65 zu einem Kondensator 52 bzw. einem Verdampfer 54 wechselweise geöffnet bzw. geschlossen werden. In Fig. 3 gelangt heißes Wasser mit Temperaturen im Bereich von 55°C - 90 °C in die rechte Adsorptionskammer 64 und Kühlwasser aus einem Kühlwasserkreislauf in die linke Adsorptionskammer 62. Entsprechend gelangt auch Kühlwasser von einer Rückkühlung zu dem Kondensator 52 und die Kältemaschine kann Kaltwasser bei dem Verdampfer 54 mit einer Temperatur im Bereich von 6 °C - 20 °C produzieren. Dieses Kaltwasser gelangt wie in Fig. 1 gezeigt über die Leitung 32 zu der Umformeinrichtung 2.

Der rechten Adsorptionskammer wird über einer insbesondere wärmetauschende Zuführung 56 Heißwasser in einem Temperaturbereich zwischen 55°C und 90°C zugeführt. Dieser Bereich ist Bestandteil des in Fig. 1 gezeigten Heißwasserkreislaufs 30. Die verwendbaren Ablufttemperaturen liegen in einem Bereich zwischen 50ºC und 100ºC.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: Umformeinrichtung
- 4: Umformungsstation
- 7: Haube
- 8: Erwärmungseinrichtung / Heizeinrichtung
- 10: Kunststoffvorformlinge
- 12: Kältemaschine / Kühleinrichtung
- 14: Zuführeinrichtung / Leitung
- 15, 16, 18: Leitung
- 20: Kaltwasserkreislauf
- 22, 24, 26: Wärmetauscher
- 28: Solarkollektor
- 30: Heißwasserkreislauf
- 32, 34: Leitungen
- 38: Leitung
- 40: Abnehmer
- 52: Kondensator
- 54: Verdampfer
- 62, 64: Adsorptions- bzw. Desorptionskammern
- 63, 65: Verbindungen
- A: Abluft
- P1, P2: Pfeile
- P3, P4, P5: Pfeile

## Patentansprüche

1. Vorrichtung (1) zum Umformen von Kunststoffvorformlingen zu Kunststoffbehältnissen mit wenigstens einer Umformungsstation (4), welche die umzuformenden Kunststoffvorformlinge (10) mit einem gasförmigen Medium beaufschlagt, um diese zu Kunststoffbehältnissen zu expandieren, wobei die Vorrichtung (1) eine Kühleinrichtung aufweist, welche zur Kühlung wenigstens eines Bereichs der Vorrichtung (1) dient,
**dadurch gekennzeichnet, dass**
die Kühleinrichtung eine wärmegespeiste Kältemaschine (12) aufweist.

2. Vorrichtung (1) nach Anspruch 1,
**dadurch gekennzeichnet, dass**
die Kältemaschine aus einer Gruppe von Kältemaschinen (12) ausgewählt ist, welche Adsorptionskältemaschinen, Absorptionskältemaschinen, Sorptionskältemaschinen und dergleichen enthält.

3. Vorrichtung (1) nach Anspruch 1,
**dadurch gekennzeichnet, dass**
die Vorrichtung (1) eine Zuführeinrichtung (14) aufweist, welche der Kältemaschine (12) von einem Bereich der Vorrichtung stammende Wärme zuführt.

4. Vorrichtung (1) nach Anspruch 1,
**dadurch gekennzeichnet, dass**
die Vorrichtung einen ersten Wärmetauscher aufweist, der zwischen einem Wärme abgebenden Bereich der Vorrichtung und der Kältemaschine (12) angeordnet ist

5. Vorrichtung (1) nach Anspruch 2,
**dadurch gekennzeichnet, dass**
die Zuführeinrichtung (14) eine Leitung zum Transport eines flüssigen oder gasförmigen Mediums aufweist.

6. Vorrichtung (1) nach wenigstens einem der vorangegangenen Ansprüche,
**dadurch gekennzeichnet, dass**
die Vorrichtung (1) eine Erwärmungseinrichtung (8) zum Erwärmen der Kunststoffvorformlinge (10) aufweist, wobei diese Erwärmungseinrichtung in einer Transportrichtung der Kunststoffvorformlinge stromaufwärts bezüglich der Umformstation (4) angeordnet ist.

7. Vorrichtung (1) nach wenigstens einem der vorangegangenen Ansprüche,
**dadurch gekennzeichnet, dass**
die Vorrichtung eine Wandlereinrichtung aufweist, welche Licht in Wärmeenergie wandelt.

8. Vorrichtung (1) nach wenigstens einem der vorangegangenen Ansprüche,
**dadurch gekennzeichnet, dass**
flüssiges Temperiermedium in oder unmittelbar hinter den die Heizstrecke begrenzenden Bauteilen (z.B. Kacheln) fließt, welches wiederum die entstehende Abwärme in die nachgeschaltete Kältemaschine leitet.

9. Verfahren zum Umformen von Kunststoffvorformlingen, wobei die Kunststoffvorformlinge in einer Heizeinrichtung wenigstens abschnittsweise erwärmt werden und anschließend in wenigstens einer Umformstation zu Kunststoffvorformlingen umgeformt werden, und wobei mittels einer Kühleinrichtung wenigstens ein Kühlvorgang durchgeführt wird,
**dadurch gekennzeichnet, dass**
zur Kühlung eine wärmegespeiste Kältemaschine verwendet wird.

10. Verfahren nach Anspruch 9,
**dadurch gekennzeichnet**
eine Abwärme des Verfahrens der Adsorptionskältemaschine zugeführt wird.

11. Verwendung einer Adsorptionskältemaschine zum Betrieb einer Vorrichtung zum Umformen von Kunststoffvorformlingen zu Kunststoffbehältnissen.
